# EUROPÄISCHE PATENTSCHRIFT

(11) **EP 0 837 962 B1**
(45) Veröffentlichungstag und Bekanntmachung des Hinweises auf die Patenterteilung: **15.09.1999**
(21) Anmeldenummer: 96910894.3
(22) Anmeldetag: 08.05.1996
(51) Int. Cl.: D06H 7/22, B26D 7/08

(54) **ULTRASCHALLVORRICHTUNG ZUM SCHNEIDEN EINER SCHMELZFÄHIGEN TEXTILBAHN UND GLEICHZEITIGEN VERSCHWEISSEN DER SCHNITTRÄNDER**
ULTRASONIC DEVICE FOR CUTTING A FUSIBLE TEXTILE WEB AND AT THE SAME TIME HEAT-SEALING THE CUT EDGES
DISPOSITIF A ULTRASONS POUR LE DECOUPAGE D'UNE BANDE TEXTILE FUSIBLE ET LE SCELLAGE A CHAUD CONCOMITANT DES BORDS DECOUPES

(30) Priorität: 11.07.1995 DE 29511224 U
(43) Veröffentlichungstag der Anmeldung: 29.04.1998
(73) Patentinhaber: Textilma AG, 6052 Hergiswil (CH)
(72) Erfinder: SPEICH, Francisco, CH-5264 Gipf-Oberfrick (CH)
(74) Vertreter: Schmauder, Klaus Dieter
(86) Internationale Anmeldenummer: CH9600177
(87) Internationale Veröffentlichungsnummer: WO9703241

(56) Entgegenhaltungen:
- EP-A- 0 532 865
- US-A- 3 555 945
- PATENT ABSTRACTS OF JAPAN vol. 018, no. 174 (E-1530), 24.März 1994 & JP,A,05 343833 (FUJITSU LTD), 24.Dezember 1993,

## Beschreibung

### Technisches Gebiet

Die Erfindung betrifft eine Ultraschallvorrichtung zum Schneiden einer schmelzfähigen Textilbahn und gleichzeitigen Verschweissen der Schnittränder gemäss Oberbegriff des Anspruches 1.

### Stand der Technik

Ultraschallvorrichtungen der eingangs genannten Art sind mehrfach bekannt, so beispielsweise aus der WO 94/18373, EP-A-0 534 300 und DE-A-35 24 400. Allen diesen Ultraschallvorrichtungen ist es gemeinsam, dass sie sich nicht auf wechselnde Dicken der zu schneidenden Textilbahnen einstellen können und deshalb insbesondere beim Schneiden von Etikettenbändern aus einer Gewebebahn schlechte bis unbrauchbare Ergebnisse liefern.

Die EP-A-0 532 865 versucht die bereits aufgezeigten Mängel dadurch zu beheben, dass vor dem Schneidmesser ein Vorverdichter angeordnet ist, der mit dem Ultraschallschwinger zusammen wirkt, um dickere Abschnitte der zu trennenden Textilbahn vor dem Schneiden zu verdünnen. Es hat sich jedoch herausgestellt, dass die Einstellung des Vorverdichters schwierig ist, so dass die Vorverdichtung entweder zu wenig ist oder bereits der Vorverdichter die Trennung der Textilbahn durchführt.

### Darstellung der Erfindung

Aufgabe der Erfindung ist nun, eine Ultraschallvorrichtung der eingangs genannten Art so auszubilden, dass ein Schneiden von Textilbahnen mit unterschiedlichen Dicken ohne weiteres möglich ist.

Die Aufgabe wird erfindungsgemäss gelöst durch die kennzeichnenden Merkmale des Anspruches 1. Dadurch, dass das Schneidmesser längs der Schneide einen sich verändernden Querschnitt aufweist, wobei jeweils nur der Querschnitt zum Einsatz kommt, der für eine bestimmte Dicke der Textilbahn geeignet ist, kann die Ultraschallvorrichtung optimal auf die zu trennende Textilbahn eingestellt werden. Dabei kann eine solche Einstellung entweder eine Grundeinstellung auf eine zu schneidende Textilbahn sein, wenn diese über die ganze Länge eine gleichbleibende Dicke aufweist, wesentlich vorteilhafter ist jedoch der Einsatz der Ultraschallvorrichtung bei einer Textilbahn, die infolge unterschiedlicher Musterung, wie diese insbesondere bei Etikettenbändern der Fall ist, eine laufend wechselnde Dicke aufweist. Dann kann sich die Ultraschallvorrichtung jeweils unmittelbar auf die zu schneidende Dicke des jeweiligen Textilbahnabschnittes einstellen. Eine solche Einstellung kann entweder durch einen dem Schneidmesser vorgeschalteten Fühler erfolgen oder unmittelbar aufgrund des Steuerprogrammes zur Herstellung der Textilbahn, welches ja für die Musterung der herzustellenden Textilbahn verantwortlich ist.

Mittels der neuen Ultraschallvorrichtung können also Textilbahnen einwandfrei geschnitten werden, gleichgültig ob sie sehr dünne oder sehr dicke Abschnitte aufweisen. Es ergeben sich ausriffelfeste Schnittränder, ohne Brauen und ohne Verfärbungen. Sie weisen trotz guter Verfestigung eine grosse Biegsamkeit und eine weiche hautfreundliche Struktur auf. Die Ultraschallvorrichtung liefert aber nicht nur gute Eigenschaften für die zu bearbeitende Textilbahn sondern verbessert gleichzeitig auch ihre eigene Standfestigkeit, speziell hinsichtlich des Schneidmessers und des Ambosses. Somit wird insgesamt auch der Nutzeffekt der Ultraschallvorrichtung verbessert und es ergibt sich insgesamt auch ein verbessertes Preis-Leistungsverhältnis.

Die Ultraschallvorrichtung ist zum Schneiden und Verschweissen der verschiedensten Textilbahnen geeignet, seien es nun Gelege, Gewirke oder Gewebe. Dabei ergeben sich Vorteile bereits dann, wenn über die ganze Länge der Textilbahn eine gleichmässige Dicke vorhanden ist, denn die Ultraschallvorrichtung kann auf einfache Weise auf die jeweils herzustellende Dicke der Textilbahn eingestellt werden. Ihre besondere Vorteilhaftigkeit erweist die Ultraschallvorrichtung jedoch, wie bereits erwähnt, bei der Herstellung von Textilbahnen mit über die Länge ständig wechselnden Mustern und dadurch bedingten Dickenänderungen der Textilbahn. Dies ist insbesondere dann gegeben, wenn mehrere Etikettenbänder zunächst in einem Breitgewebe nebeneinander gewebt werden und das Breitgewebe dann in einzelne Etikettenbänder zerschnitten werden muss. Dabei kann die Ultraschallvorrichtung unabhängig von der die Textilbahn herstellenden Vorrichtung zum Einsatz kommen, vorteilhafter ist jedoch, wenn die Ultraschallvorrichtung direkt an der zur Herstellung der Textilbahn dienenden Vorrichtungen, insbesondere einer Webmaschine angeordnet ist.

Besonders vorteilhafte Ausführungsbeispiele der Erfindung sind in den Ansprüchen 2 bis 17 beschrieben.

Zunächst ist es grundsätzlich möglich, den Ultraschallschwinger mit dem Amboss zu verbinden und gegen das Schneidmesser wirken zu lassen. Vorteilhafter ist jedoch, das Schneidmesser mit dem Ultraschallschwinger zu verbinden und gegen einen Amboss wirken zu lassen. Es ist aber durchaus möglich, dass sowohl das Schneidmesser wie der Amboss mit einem Ultraschallschwinger versehen sind.

Die Schneide kann gemäss Anspruch 2 im Querschnitt gesehen kurvenförmige Seitenflächen aufweisen, vorteilhafter ist jedoch eine Ausgestaltung nach Anspruch 3 mit geraden Seitenflächen.

Es ist möglich, dass die Schneide gemäss Anspruch 4 eine scharfkantige Schneidkante aufweist vorteilhafter ist jedoch eine Ausgestaltung nach Anspruch 5, denn die abgestumpfte Schnittkante erhöht nicht nur die Standzeiten des Schneidmessers und des Ambosses, sondern liefert auch für den Schnitt selber vorteilhafte Eigenschaften, denn das durch die breite Schneidkante verdrängte geschmolzene Textilmaterial kann seitlich zur Verfestigung der Schnittränder zum Einsatz kommen.

Besonders vorteilhaft ist eine Ausgestaltung nach Anspruch 6, denn der kleinere Keilwinkel bei einem dickeren Textilbahnabschnitt erleichtert das Durchdringen des Schneidmessers durch die Textilbahn. Bei einer dünneren Textilbahn ist jedoch ein grosser Keilwinkel der Schneide von Vorteil, der die schnellere Durchdringung der Textilbahn mit einer breiteren Auflage an den Textilbahnen kombiniert, wodurch einerseits ein zu schnelles Durchdringen verhindert wird und gleichzeitig ein breiterer Rand zum Verschweissen erfasst wird. Damit wird die bei einer dünnen Textilbahn verringerte Verschweissung aufgrund der Dünne durch einen breiteren Verschweissrand ausgeglichen.

Grundsätzlich ist es möglich, gemäss Anspruch 7 ein Schneidmesser mit einer geraden Schneidkante zu verwenden, wobei dann vorteilhafterweise der Amboss gewölbt auszuführen ist, um ein verhakungsfreies Durchgleiten der Textilbahn zu gewährleisten. Um verschiedene Bereiche des Schneidmessers zum Einsatz zu bringen, kann nun entweder das Schneidmesser in Richtung der Schneidkante relativ zum Amboss hin- und herbewegt werden oder das Schneidmesser ist ruhend angeordnet und der Amboss wird längs der Schneidkante hin- und herbewegt. Vorteilhafter ist eine Ausgestaltung nach Anspruch 8, wobei dann der Amboss lageunverändert ausgebildet sein kann, jedoch gemäss Anspruch 9 vorteilhaft als drehbarer Zylinder ausgebildet ist, der durch die darüber geführte Textilbahn gedreht wird. Ein solcher Amboss hat den Vorteil, dass das Einwirken auf eine grössere Fläche, das heisst die Umfangsfläche des Zylinders verteilt ist, wodurch sich die Lebensdauer des Ambosses wesentlich verlängern lässt. Ausserdem bietet diese Lösung eine schonendere Behandlung der Textilbahn, da diese während des Schneidens und Verschweissens nicht über eine ruhende Fläche reiben muss.

Wie bereits erwähnt, kann das Schneidmesser und/oder der Amboss mit einem Ultraschallschwinger versehen sein. Dementsprechend kann eine Ausgestaltung nach Anspruch 10 zweckmässig sein. Eine vorteilhafte Ausbildung des Ultraschallschwingers beschreibt Anspruch 11.

Der Anspruch 12 umschreibt eine besonders vorteilhafte Ausgestaltung der Ultraschallvorrichtung. Kommen mehrere Ultraschallvorrichtungen gleichzeitig zur Anwendung, so ist insbesondere die Weiterbildung nach Anspruch 13 von Vorteil, da längs der Stange mehrere Ultraschallvorrichtungen angeordnet und gleichzeitig gesteuert werden.

Der Anspruch 14 beschreibt die bereits oben erwähnten vorteilhaften Massnahmen, um das Schneidmesser auf wechselnde Dicken einer laufenden Textilbahn einzustellen.

Eine besonders vorteilhafte Anwendung der Ultraschallvorrichtung ist in Anspruch 15 beschrieben und zwar an einer Webmaschine zur Herstellung von Etikettenbändern aus einem Breitgewebe, wie bereits oben angedeutet. Durch das Schneiden auf der Webmaschine im Bereich zwischen dem Breithalter und der Warenabzugsvorrichtung, in welchem die Breitgewebebahn noch vom Riet geführt vorliegt, ergibt sich eine grösst mögliche Schnittgenauigkeit. Besonders vorteilhafte Ergebnisse erhält man dabei, wenn die Ultraschallvorrichtung gemäss Anspruch 16 vor einer Thermofixiereinrichtung der Webmaschine angeordnet ist, welche die sich beim Schneiden und Verschweissen der Schnittränder ergebenden Spannungen im herzustellenden Etikettenband ausgleicht. Zweckmässigerweise ist die Ultraschallvorrichtung gemäss Anspruch 17 vor der Warenabzugsvorrichtung angeordnet.

### Kurzbeschreibung der Zeichnungen

Ausführungsbeispiele des Gegenstandes der Erfindung werden nachfolgend nach den Zeichnungen näher beschrieben, dabei zeigen:
- Figur 1: eine Ultraschallvorrichtung an einer Warenabzugsvorrichtung, in Seitenansicht;
- Figur 2: ein Etikettenband im Ausschnitt und in schaubildlicher Darstellung zur Verdeutlichung der schwankenden Dicken-Verhältnisse;
- Figur 3: ein Schneidmesser mit kurvenförmigen Seitenflächen, im Querschnitt;
- Figur 4: ein Schneidmesser mit geraden Seitenflächen, im Querschnitt;
- Figur 5: die Zuordnung eines bestimmten Querschnittes zu einer bestimmten Dicke der Textilbahn;
- Figur 6: eine Webmaschine zur Herstellung von Etikettenbändern, in schematischer Darstellung und in Seitenansicht;
- Figur 7: die Anordnung mehrerer Ultraschallvorrichtungen an der Webmaschine nach Figur 6 in Draufsicht;
- Figur 8: die Verbindung mehrerer Ultraschallvorrichtungen mit einem Ultraschallgenerator.

### Wege zur Ausführung der Erfindung

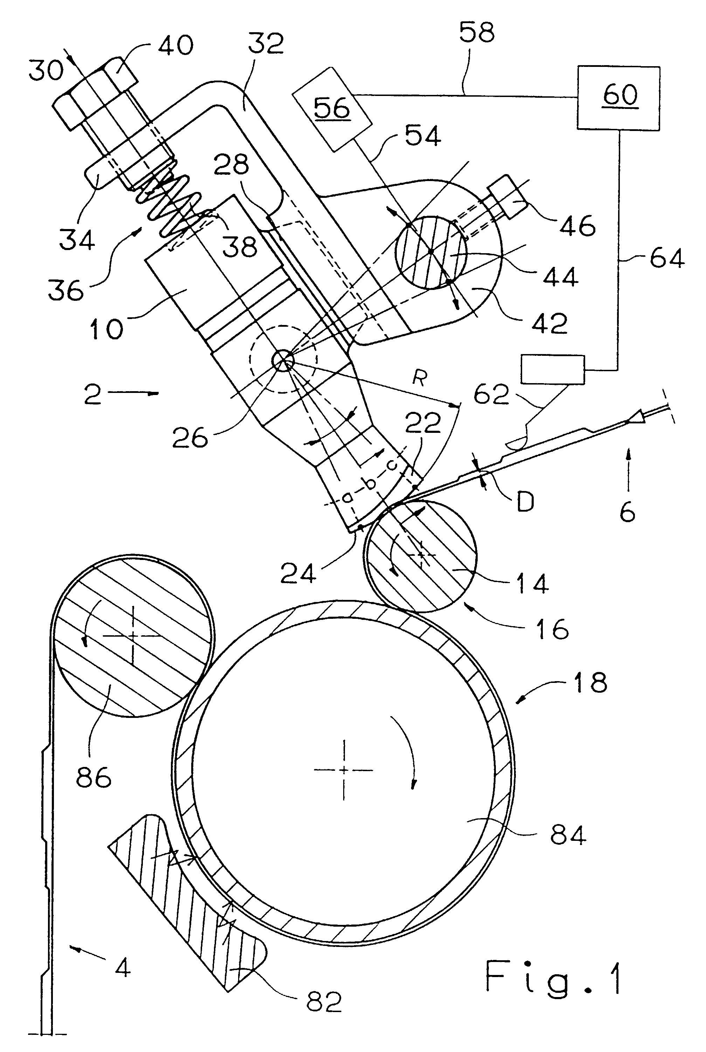

Die Figuren 1 bis 8 beschreiben eine Ultraschallvorrichtung 2 im Zusammenhang mit der Herstellung von Etikettenbändern 4 aus einem Breitgewebe 6 auf einer Webmaschine 8.

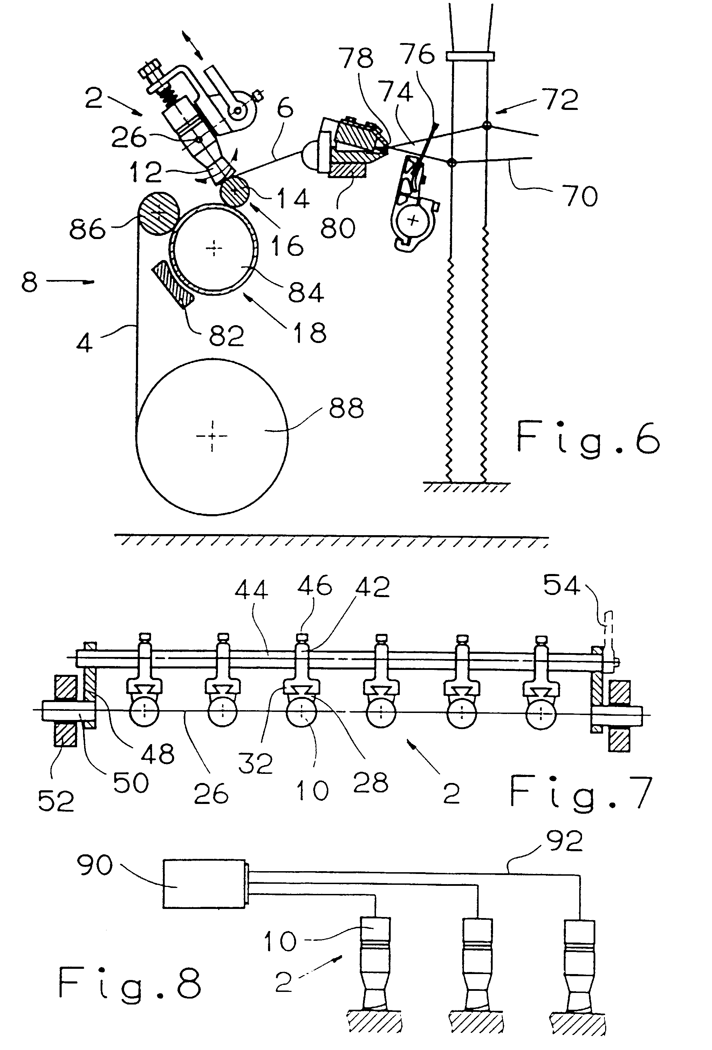

Die Ultraschallvorrichtungen 2 weisen einen Ultraschallschwinger 10 auf, an dessen vorderem Ende ein Schneidmesser 12 angeordnet ist, das mit einem Amboss 14 zusammenwirkt, der im vorliegenden Beispiel als erste Umlenkwalze 16 einer Warenabzugsvorrichtung 18 ausgebildet ist. Das Schneidmesser 12 enthält eine keilförmige Schneide 22 mit einem sich verändernden Querschnitt a,b,c. Die Schneidkante 24 ist bogenförmig ausgestaltet und bildet einen Abschnitt eines Kreises mit einem Radius R um die Mittelpunktsachse 26. Der Ultraschallschwinger 10 ist mit seinem Schneidmesser 12 an einem Schlitten 28 angeordnet, der in Zustellrichtung 30 verschieblich in einem Halter 32 geführt ist. Der Halter weist einen abgewinkelten Teil 34 auf, an dem eine Vorspannvorrichtung 36 angeordnet ist, die im vorliegenden Beispiel aus einer Schraubenfeder 38 gebildet ist, die mittels einer Schraube 40 hinsichtlich der Vorspannkraft einstellbar ist. Anstelle der Schraube können auch andere Mittel, insbesondere auch pneumatische Mittel vorgesehen sein, um das Schneidmesser 12 gegen den Amboss 14 vorzuspannen. Der Halter ist über einen Lagerbock 42 an einer Stange 44 angeordnet und mittels einer Schraube 46 fixiert. Die Stange 44, an der gemäss Figur 7 auch mehrere Ultraschallvorrichtungen 2 angeordnet sein können, ist an den Enden an Armen 48 befestigt, die wiederum über Achsen 50 verschwenkbar im Gestell 52 gelagert sind. Die Anordnung ist so getroffen, dass die Achsen 50 mit der Mittelpunktsachse 26 zusammenfallen, so dass die geforderte Schwenkbewegung um die Mittelpunktsachse sichergestellt ist. Zum Verschwenken der Ultraschallvorrichtung 2 ist über eine Stange 54 ein Stellmotor 56 angeschlossen, der über eine Leitung 58 mit einer Steuervorrichtung 60 verbunden ist. Diese Steuervorrichtung 60 steuert den Stellmotor entweder aufgrund eines Steuerprogrammes zur Herstellung der Etikettenbänder oder aufgrund eines durch einen Fühler 62 über die Leitung 64 zugeführten Dicken-Signals des abgetasteten Breitgewebes 6.

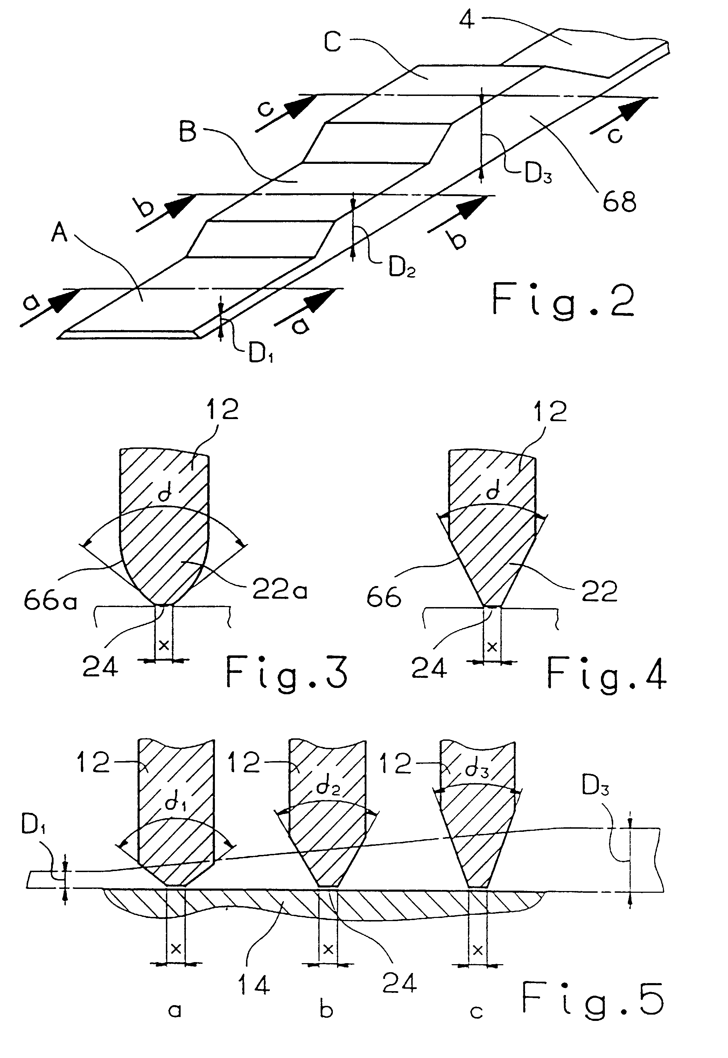

Das Schneidmesser 12 weist, wie bereits oben erläutert, einen keilförmigen Querschnitt auf, wobei die Seitenflächen 66 gemäss Figur 4 gerade sein können oder gemäss Figur 3 gebogene Seitenflächen 66a sein können. Die Schneidkante 24 ist im vorliegenden Beispiel nicht scharfkantig sondern vorzugsweise abgestumpft ausgebildet und weist die Breite x auf, die vorzugsweise über die ganze Länge der Schneidkante 24 gleichbleibend ist. Das Schneidmesser 12 weist nun einen über die ganze Länge der Schneidkante wechselnden Querschnitt a,b,c auf, in dem der Keilwinkel a sich vorzugsweise zwischen 0° und 160° ändert. Wie aus den Figuren 1,2 und 5 hervorgehen, ist einer bestimmten Dicke D₁ bis D₃ des Breitgewebes 6 beziehungsweise des Etikettenbandes 4 ein bestimmter Keilwinkel α₁ bis α₃ zugeordnet und zwar derart, dass bei einem dünnen Abschnitt A des Breitgewebes 6 das Schneidmesser die Stellung a einnimmt, in der es einen relativ grossen Keilwinkel α₁ aufweist. Mit zunehmender Dicke D₂,D₃ der Bereiche B und C des Breitgewebes 6 nimmt der Keilwinkel von α₂ nach α₃ ab, so dass der Keilwinkel a umso kleiner wird je dicker das Gewebe wird. Durch das Schneiden entsteht ein Etikettenband 4 mit der Schnittkante 68.

Insbesondere die Figur 6 zeigt die Anordnung der Ultraschallvorrichtung 2 an einer Webmaschine üblichen Aufbaus. Kettfäden 70 werden über eine Fachbildevorrichtung 72 mustergemäss zu einem Webfach 74 geöffnet. In nicht näher dargestellter Weise wird ein Schussfaden in das Webfach 74 eingebracht und mittels eines Webblattes 76 am Warenrand 78 angeschlagen. Das hergestellte Breitgewebe wird über einen Breithalter 80 zur Warenabzugsvorrichtung 18 geführt. Die erste Umlenkwalze 18 der Warenabzugsvorrichtung dient gleichzeitig auch als Amboss 14 für die Ultraschallvorrichtung 2, mittels der das ankommende Breitgewebe 6 in einzelne Etikettenbänder 4 zerschnitten wird. Die Etikettenbänder 4 werden um eine Trommel 84 der Warenabzugsvorrichtung 18 geführt, an der auch eine Thermofixiereinrichtung 82 angeordnet ist, um die noch längsgespannten Etikettenbänder, welche durch den Schneid- und Verschweissvorgang mit inneren Spannungen belegt sind, spannungsfrei zu machen. Nach der Trommel 84 laufen die Etikettenbänder über eine weitere Umlenkwalze 86 zu einer Aufwickelvorrichtung 88.

Gemäss Figur 8 können mehrere Ultraschallschwingvorrichtungen 2 von einem gemeinsamen Ultraschallgenerator 90 über Leitungen 92 angetrieben werden.

### BEZUGSZEICHENLISTE

- 2: Ultraschallvorrichtung
- 4: Etikettenband
- 6: Breitgewebe
- 8: Webmaschine
- 10: Ultraschallschwinger
- 12: Schneidmesser
- 14: Amboss
- 16: Umlenkwalze
- 18: Warenabzugsvorrichtung
- 22: keilförmige Schneide
- 24: Schneidkante
- 26: Mittelpunktsachse
- 28: Schlitten
- 30: Zustellvorrichtung
- 32: Halter
- 34: abgewickelter Teil
- 36: Vorspannvorrichtung
- 38: Schraubenfeder
- 40: Schraube
- 42: Lagerbock
- 44: Stange
- 46: Schraube
- 48: Arm
- 50: Achse
- 52: Gestell
- 54: Stange
- 56: Stellmotor
- 58: Leitung
- 60: Steuervorrichtung
- 62: Fühler
- 64: Leitung
- 66: Seitenfläche
- 66a: Seitenfläche
- 68: Schnittkante
- 70: Kettfaden
- 72: Fachbildevorrichtung
- 74: Webfach
- 76: Webblatt
- 78: Warenrand
- 80: Breithalter
- 82: Thermofixiereinrichtung
- 84: Trommel
- 86: Umlenkwalze
- 88: Aufwickelvorrichtung
- 90: Ultraschallgenerator
- 92: Leitung

## Patentansprüche

1. Ultraschallvorrichtung zum Schneiden einer schmelzfähigen Textilbahn (6) und gleichzeitigem Verschweissen der Schnittränder, mit einem Schneidmesser (12), welches mittels einer keilförmigen Schneide (22,22a) mit einem Amboss (14) zusammenwirkt, wobei das Schneidmesser (12) oder der Amboss (14) mit einem Ultraschallschwinger (10) verbunden ist, dadurch gekennzeichnet, dass das Schneidmesser (12) längs der Schneide (22,22a) einen sich verändernden Querschnitt (a,b,c) aufweist, wobei das Schneidmesser (12) und/oder der Amboss (14) derart einstellbar sind/ist, dass jeweils der für eine bestimmte Dicke (D,D₁,D₂,D₃) der Textilbahn (6) geeignete Querschnitt (a,b,c) zum Einsatz bringbar ist.

2. Ultraschallvorrichtung nach Anspruch 1, dadurch gekennzeichnet, dass die Schneide (22a) im Querschnitt gesehen kurvenförmige Seitenflächen (66a) aufweist.

3. Ultraschallvorrichtung nach Anspruch 1, dadurch gekennzeichnet, dass die Schneide (22) im Querschnitt gesehen gerade Seitenflächen (66) aufweist.

4. Ultraschallvorrichtung nach einem der Ansprüchen 1 bis 3, dadurch gekennzeichnet, dass die Schneide (22,22a) eine scharfkantige Schneidkante aufweist.

5. Ultraschallvorrichtung nach einem der Ansprüchen 1 bis 3, dadurch gekennzeichnet, dass die Schneide (22,22a) eine abgestumpfte Schneidkante (24) der Breite (x) aufweist, die vorzugsweise über die ganze Länge der Schneidkante (24) konstant ist.

6. Ultraschallvorrichtung nach einem der Ansprüche 1 bis 5, dadurch gekennzeichnet, dass der Keilwinkel (α,α₁,α₂,α₃), der vorzugsweise 0° bis 160° beträgt, der Schneide (22,22a) für dickere Textilbahn-Abschnitte (B,C) kleiner und für dünnere Textilbahn-Abschnitte (A,B) grösser ist.

7. Ultraschallvorrichtung nach einem der Ansprüche 1 bis 6, dadurch gekennzeichnet, dass das Schneidmesser eine gerade Schneidkante aufweist und mit einem gewölbten Amboss zusammenwirkt, die relativ zueinander längs der Schneidkante hin- und herbewegbar sind.

8. Ultraschallvorrichtung nach einem der Ansprüche 1 bis 6, dadurch gekennzeichnet, dass das Schneidmesser (12) eine mindestens einem Kreisabschnitt entsprechend gebogene Schneidkante (24) aufweist, wobei das Schneidmesser (12) um die Mittelpunktsachse (26) des Kreisabschnittes drehbar angeordnet ist.

9. Ultraschallvorrichtung nach einem der Ansprüche 1 bis 8, dadurch gekennzeichnet, dass der Amboss (14) als drehbarer Zylinder (16) ausgebildet ist, über den die Textilbahn (6) geführt ist.

10. Ultraschallvorrichtung nach einem der Ansprüche 1 bis 9, dadurch gekennzeichnet, dass der Amboss mit einem Ultraschallschwinger versehen ist.

11. Ultraschallvorrichtung nach einem der Ansprüche 1 bis 10, dadurch gekennzeichnet, dass der Ultraschallschwinger (10) mit 15 bis 100 kHerz schwingt und vorzugsweise als magnetischer oder piezoelektrischer Wandler ausgebildet ist.

12. Ultraschallvorrichtung nach einem der Ansprüche 1 bis 11, dadurch gekennzeichnet, dass der Ultraschallschwinger (10) mit dem Schneidmesser (12) mittels eines in Zustellrichtung (30) zum Amboss (14) verschiebbaren Schlittens (28) an einem Halter (32) angeordnet und mittel einer einstellbaren Vorspannvorrichtung (36), vorzugsweise einer Schraubenfeder (38) gegen den Amboss (14) vorspannbar ist.

13. Ultraschallvorrichtung nach einem der Ansprüche 1 bis 12, dadurch gekennzeichnet, dass der Halter (32) an einer Stange (44) befestigt ist, die um die Mittelpunktsachse (26) schwenkbar angeordnet ist.

14. Ultraschallvorrichtung nach einem der Ansprüche 1 bis 13, daduch gekennzeichnet, dass sie einen Stellmotor (56) zur Einstellung der Relativlage zwischen Schneidmesser (12) und Amboss (14) aufweist, wobei der Stellmotor (56) mit einer Steuervorrichtung (60) verbunden ist, die den Stellmotor (56) in Abhängigkeit von einem die Textilbahn (6) abtastenden Fühler (62) oder von einem Steuerprogramm zur Herstellung der Textilbahn (6) steuert.

15. Ultraschallvorrichtung nach einem der Ansprüche 1 bis 14, dadurch gekennzeichnet, dass sie an einer Webmaschine (8) zur Herstellung von Etikettenbändern (4) aus einem Breitgewebe (6) angeordnet ist, wobei zum Zerschneiden des Breitgewebes (6) zwischen jedem eingewebten Etikettenband (4) eine Ultraschallvorrichtung (2) angeordnet ist.

16. Ultraschallvorrichtung nach Anspruch 15, dadurch gekenn zeichnet, dass sie vor einer Thermofixiereinrichtung (82) der Webmaschine (8) angeordnet ist.

17. Ultraschallvorrichtung nach Anspruch 15 oder 16, dadurch gekennzeichnet, dass sie vor der Warenabzugsvorrichtung (18) der Webmaschine (8) angeordnet ist.

## Claims

1. Ultrasonic device for cutting a fusible textile web (6) and, at the same time, fusing the cut edges, having a cutting knife (12), which co-operates, by means of a wedge-shaped blade (22, 22a), with an anvil (14), wherein the cutting knife (12) or the anvil (14) is connected to an ultrasonic vibrator (10), characterised in that the cutting knife (12) has a cross-section (a, b, c) that changes along the length of the blade (22, 22a), the cutting knife (12) and/or the anvil (14) being adjustable so that the cross-section (a, b, c) appropriate to a specific thickness (D, D₁, D₂, D₃) of the textile web (6) can be brought into use.

2. Ultrasonic device according to claim 1, characterised in that the blade (22a) has lateral faces (66a) that, seen in cross-section, are curved.

3. Ultrasonic device according to claim 1, characterised in that the blade (22) has lateral faces (66) that, seen in cross-section, are straight.

4. Ultrasonic device according to any one of claims 1 to 3, characterised in that the blade (22, 22a) has a sharp-edged cutting edge.

5. Ultrasonic device according to any one of claims 1 to 3, characterised in that the blade (22, 22a) has a blunt cutting edge (24) of a width (x) that preferably is constant over the entire length of the cutting edge (24).

6. Ultrasonic device according to any one of claims 1 to 5, characterised in that the angle of taper (α, α₁, α₂, α₃), which is preferably from 0° to 160°, of the blade (22, 22a) is relatively small for relatively thick regions (B, C) of textile web and relatively large for relatively thin regions (A, B) of textile web.

7. Ultrasonic device according to any one of claims 1 to 6, characterised in that the cutting knife has a straight cutting edge and co-operates with a convex anvil, the two being arranged to be moved back and forth relative to one another along the cutting edge.

8. Ultrasonic device according to any one of claims 1 to 6, characterised in that the cutting knife (12) has a cutting edge (24) that is curved to correspond to at least one arc of a circle, the cutting knife (12) being arranged to rotate about the centre axis (26) of the arc of the circle.

9. Ultrasonic device according to any one of claims 1 to 8, characterised in that the anvil (14) is in the form of a rotatable cylinder (16), over which the textile web (6) is guided.

10. Ultrasonic device according to any one of claims 1 to 9, characterised in that the anvil is provided with an ultrasonic vibrator.

11. Ultrasonic device according to any one of claims 1 to 10, characterised in that the ultrasonic vibrator (10) vibrates at from 15 to 100 kilohertz and is preferably in the form of a magnetic or piezoelectric transducer.

12. Ultrasonic device according to any one of claims 1 to 11, characterised in that the ultrasonic vibrator (10) is arranged, together with the cutting knife (12), on a support (32) by means of a carriage (28), which is displaceable in the direction of feed (30) towards the anvil (14), and is arranged to be biased against the anvil (14) by means of an adjustable biasing device (36), preferably a helical spring (38).

13. Ultrasonic device according to any one of claims 1 to 12, characterised in that the support (32) is fastened to a bar (44), which is arranged to pivot about the centre axis (26).

14. Ultrasonic device according to any one of claims 1 to 13, characterised in that it has a servo-motor (56) for adjusting the relative positions of the cutting knife (12) and the anvil (14), the servo-motor (56) being connected to a control device (60), which controls the servo-motor (56) in dependence upon a sensor (62) sensing the textile web (6) or upon a control programme for manufacture of the textile web (6).

15. Ultrasonic device according to any one of claims 1 to 14, characterised in that it is arranged on a weaving machine (8) for manufacturing label tapes (4) from a wide woven fabric (6), an ultrasonic device (2) being arranged between each woven label tape (4) for cutting the wide woven fabric (6).

16. Ultrasonic device according to claim 15, characterised in that it is arranged upstream of a thermofixing device (82) of the weaving machine (8).

17. Ultrasonic device according to claim 15 or claim 16, characterised in that it is arranged upstream of the product take-off device (18) of the weaving machine (8).

## Revendications

1. Dispositif à ultrasons pour découper une bande textile fusible (6) et souder concomitamment les bords de coupe, comprenant :
- un couteau (12) coopérant par une arête en forme de coin (22, 22a) avec une enclume (14),
- l'arête (12) et l'enclume (14) étant reliées à un oscillateur à ultrasons (10),
caractérisé en ce que
le couteau (12) présente, le long de l'arête (22, 22a), une section (a, b, c) variable, le couteau (12) et ou l'enclume (14) étant réglables pour que chaque fois la section (a, b, c) appropriée pour une certaine épaisseur (D, D₁, D₂, D₃) de la bande textile (6) soit mise en oeuvre.

2. Dispositif à ultrasons selon la revendication 1,
caractérisé en ce que
l'arête (22a) présente, en section, des surfaces latérales courbes (66a) .

3. Dispositif à ultrasons selon la revendication 1,
caractérisé en ce que
l'arête (22) présente, en section, des surfaces latérales droites (66) .

4. Dispositif à ultrasons selon l'une des revendications 1 à 3,
caractérisé en ce que
l'arête de coupe (22, 22a) présente une arête à bords vifs.

5. Dispositif à ultrasons selon l'une des revendications 1 à 3,
caractérisé en ce que
l'arête (22, 22a) présente une arête (24) émoussée de largeur (x) constante, de préférence sur toute la longueur de l'arête (24).

6. Dispositif à ultrasons selon l'une des revendications 1 à 5,
caractérisé en ce que
l'angle de coin (α, α₁, α₂, α₃) est de préférence compris entre 0° et 160°, et l'arête (22, 22a) est plus petite pour des segments de produit textile épais (B, C) et plus grande pour des segments de produit textile plus mince (A, B).

7. Dispositif à ultrasons selon l'une des revendications 1 à 6,
caractérisé en ce que
le couteau présente une arête droite et coopère avec une enclume courbe, avec un mouvement alternatif relatif entre ces deux pièces le long de l'arête de coupe.

8. Dispositif à ultrasons selon l'une des revendications 1 à 6,
caractérisé en ce que
'le couteau (12) présente une arête (24) au moins courbe selon un arc de cercle, le couteau (12) étant monté pivotant sur l'axe central (26) du segment d'arc de cercle.

9. Dispositif à ultrasons selon l'une des revendications 1 à 8,
caractérisé en ce que
l'enclume (14) est un cylindre rotatif (16) sur lequel passe la bande textile (6).

10. Dispositif à ultrasons selon l'une des revendications 1 à 9,
caractérisé en ce que
l'enclume est munie d'un oscillateur à ultrasons.

11. Dispositif à ultrasons selon l'une des revendications 1 à 10,
caractérisé en ce que
l'oscillateur à ultrasons (10) oscille à une fréquence de 15 à 100 kHz en étant réalisé de préférence comme un convertisseur magnétique ou piézoélectrique.

12. Dispositif à ultrasons selon l'une des revendications 1 à 11,
caractérisé en ce que
l'oscillateur à ultrasons (10) est monté avec le couteau (12) à l'aide d'un chariot (28) coulissant dans la direction de réglage (30) par rapport à l'enclume (14), sur un support (32), en étant précontraint à l'aide d'un dispositif de précontrainte réglable (36) de préférence un ressort hélicoïdal (38), contre l'enclume (14).

13. Dispositif à ultrasons selon l'une des revendications 1 à 12,
caractérisé en ce que
le support (32) est fixé à une tige (44) montée pivotante autour de l'axe central (26).

14. Dispositif à ultrasons selon l'une des revendications 1 à 13,
caractérisé en ce qu'
il comporte un moteur d'actionnement (56) pour régler la position relative entre le couteau (12) et l'enclume (14), le moteur d'actionnement (56) étant relié à un dispositif de commande (60) qui commande le moteur d'actionnement (56) en fonction d'un palpeur (62) qui détecte la bande textile (6), ou en fonction d'un programme de commande pour la fabrication de la bande textile (6).

15. Dispositif à ultrasons selon l'une des revendications 1 à 14,
caractérisé en ce qu'
il est prévu sur un métier à tisser (8), pour la fabrication de bandes d'étiquettes (4) à partir d'un tissu large (6) et pour la découpe du tissu large (6), un dispositif à ultrasons (2) pour chaque bande d'étiquettes (4) tissée.

16. Dispositif à ultrasons selon la revendication 15
caractérisé en ce qu'
il est monté en amont d'une installation de thermofixation (82) du métier à tisser (8).

17. Dispositif à ultrasons selon l'une des revendications 15 ou 16,
caractérisé en ce qu'
il est prévu en amont du dispositif d'extraction de produit (18) du métier à tisser (8).
